# EUROPEAN PATENT APPLICATION

(11) **EP 0 765 678 A1**
(43) Date of publication of application: **02.04.1997**
(21) Application number: 96307116.2
(22) Date of filing: 27.09.1996
(51) Int. Cl.: A63B 55/08, B62D 51/04

(54) **Collapsible trolley**

(30) Priority: 29.09.1995 GB 9519871
(71) Applicant: PowaKaddy International Limited, Sittingbourne, Kent ME10 3JH (GB)
(72) Inventor: deGraft-Johnson, John, Stowmarket, Suffolk IP14 3ER (GB); Hawker, John, Suffolk IP7 5AP (GB)
(74) Representative: Silverman, Warren

(57) **Abstract**

A trolley construction typically for a golf cart, comprises a wheel carrying portion and a load carrying portion and is collapsible so as to reduce both overall length and bulk. The trolley has a pair of wheels (26,27) joined by an axle (25) which is of three part construction with a first part (37) adjacent one wheel (26), a second part (38) adjacent the other wheel (27) of such pair, a third part (40) connected to the second part (38) via flexible joint (39) from which it projects towards the first part (37) to which it is releasably engaged.

## Description

This invention relates to collapsible trolleys and more particularly to golf trolleys, otherwise known as golf carts, especially, but not exclusively powered golf trolleys (or carts).

As the sport of golf becomes increasingly popular, it has attracted an increasingly broad spectrum of players having differing requirements concerning the transporting of golf clubs around the course. The carrying of one's own clubs has become the exception rather than the rule as the number of clubs to be transported has increased. Moreover, as golf has become a sport played by an increasing number of players who find pulling a trolley up inclines or over difficult terrain an arduous task, the benefit of a powered drive to the trolley's paired wheels has become appreciated to an increasing extent.

With manual, i.e. unpowered trolleys the wheels have operated completely independently of each other, being mounted on projections extending from the ends of paired legs and acting as axles, which wheels are brought together when folding down the trolley. Powered trolleys are relatively bulky. There is a need to provide support means for a battery, as well as drive means for the wheels which themselves may be 8 to 10 centimetres in width. The wheels are themselves connected by a rigid axle whereby drive generated at one wheel axle is transferred to the other wheel. Even with the battery removed, such construction does not allow collapsing or folding of the trolley to an extent such as to enable it to be carried conveniently in the luggage space of a motor vehicle.

It is an object of the present invention to provide a trolley construction collapsible to enable its storage in a confined space.

According to the present invention, there is provided a trolley construction comprising a wheel carrying portion and a load carrying portion connected together in such manner that folding of the respective portions may be carried out, the wheel carrying portion comprising a pair of wheels joined by an axle which is of three-part construction having a first part adjacent one wheel, a second part adjacent the other wheel and a third part connected to the second part via a flexible joint from which it projects towards the first part to which it is releasably engaged.

By being able to separate the axle into two sections with one such section comprising the second and third parts of the axle with connecting flexible joint being foldable at the flexible joint to enable the aforementioned third part of the axle to be removed from the line of the axis of the angle, folding of the trolley construction to a compact arrangement becomes possible. The main hindrance to bringing together of the limbs carrying the respective wheels is removed. This is of particular value with a powered trolley as aforesaid when the first part of the axle arrangement will be driven by a motor and its coupling to the third part will result in both wheels being driven simultaneously. Once the battery and its support are removed, the axle parts are disengaged and the third axle part is folded away appropriately by means of the flexible joint, the limbs can be brought together just like with a manual trolley to produce a compact arrangement. The flexible joint, which is preferably a universal joint, makes it possible to bring that wheel which is unencumbered by the drive mechanism for the wheels up into close association with the other wheel when the load bearing portion of the trolley is folded down into close proximity to the two wheels.

The first and third parts of the axle construction are preferably linked to one another by means of a bayonet joint. However alternative coupling methods may be contemplated. Thus, there may be connection by means of a locked peg or bolt passed through mating apertures in end regions of the first and third axle parts brought into alignment as a result of telescopic engagement of one axle part with the other.

For a better understanding of the invention, and to show how the same can be carried into effect, reference will now be made, by way of example only, to the accompanying drawings, wherein:
Figure 1 is a perspective view from the rear and to one side of a powered golf trolley embodying the invention;
Figure 2 is a rear view of the golf trolley of Figure 1 in its collapsed condition;
Figures 3a to 3c show the construction of a bayonet joint connecting axle parts of the golf trolley; and
Figure 3d shows the socket construction of the bayonet fitting comprised by the bayonet joint.

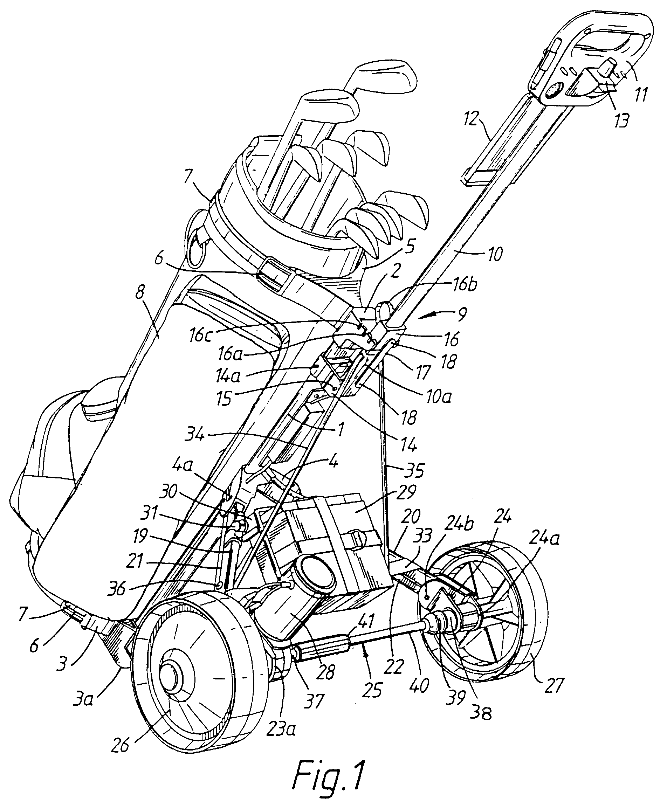

A fully collapsible golf trolley embodying the invention is shown in Figure 1 to comprise a main support bar 1, which may be a hollow aluminium tube of flattened cross-section to provide greater strength, entering upper and lower golf bag retainers 2 and 3 at the respective ends thereof and passing through an A-bracket 4 at a position intermediate its ends. Both the golf bag retainers comprise Y-shaped bodies defining a curved support surfaces 5 and are provided at the free ends of the "Y" with slots 6 through which pass straps 7 for holding a golf bag shown at 8 against the adjacent curved surfaces. The lower golf bag retainer 3 incorporates a foot 3a for the golf bag to rest upon and which rest upon the ground when the trolley is stood in its rest position.

The upper golf bag retainer 2 is shown in engagement with an adjustable handle arrangement 9 comprising an elongate tube 10 which may, like tube 1, be an aluminium tube of flattened section, and which is surmounted by a handle 11 to which is attached a score card holder 12 and which carries at its underside control means 13 for a motor to be described below and to which there is connection through wires which pass through hollow tubes of the frame. The tube 10 of the handle arrangement 9 is pivotally attached to a bracket 14 through which the tube 1 passes and to which the bracket 14 is secured by a bolt 14a. A bolt 15 securing the bottom of the tube 10 to the bracket 14 passes through a cap 10a fitted over the bottom end of the tube 10. Free rotation of the cap with tube 10 therein takes place about the bolt 15. Above the cap 10a is a locking element 16 slidable on the tube 10 and comprising a transverse pin 16a and a gripping ring 16b. The pin rests in a groove 16c in the top of the locking element 16, three grooves, 16c being shown and providing a choice of load bearing positions. A strap 17 of elastomeric material attaches slide member 16 to a position at the lower end of the cap 10a. Strap 17 is secured to cap 10a and slide member 16 by means of rivets 18.

Mounted to the A-bracket 4 are a pair of tubular limbs 19 and 20 of like form to tubes 1 and 10 and which are supported along their lengths in U-sectioned guide members 21 and 22. At the opposite ends, the limbs 19 and 20 and the associated guide members 21 and 22 enter single brackets 23 and 24 respectively which comprise bushes 23a and 24a through which passes an axle 25 on the ends of which are mounted a pair of wheels 26 and 27. An electric motor 28 is mounted to one end of the axle and is powered by a battery 29 which is strapped onto a support tray 30 attached to limbs 19 and 20 by retaining hooks 31 and 32 and supported on webbing 33 which is attached to the lower ends of the limbs 20 and 21.

At their upper ends limbs 19 and 20 and guide members 21 and 22 are independently secured by bolts 4a to the A-bracket 4 while the limbs 19 and 20 and guide members 21 and 22 are secured at their lower ends to single brackets 23 and 24 respectively by bolts 23b and 24b, each of the bolts allowing rotation of the attached limb or guide member. The limbs and the associated guide members are not secured to one another although the limbs are able to sit within the guide members when the trolley is erected and be supported thereby and to become spaced apart from one another when the trolley is in the collapsed condition, as a result of the modified geometry of the arrangement which is then achieved.

Rigidity is given to the overall trolley assembly by support rods 34 and 35 extending from openings in cap 10a, which free ends thereof enter, to the limbs 19 and 20 where the rods are kept in position by oversized rounded heads 36.

The axle 25 is basically of 3-part construction comprising a first part 37 attached to the output of the motor 28 and extending through bush 23a and a second part 38 attached to an axial projection (not shown) from wheel 27 and extending through bush 24a and terminating in a flexible joint 39 from which extends a tubular member 40 on the free end of which is a bayonet fitting 41 of overall greater diameter and providing therewith the third part as aforesaid of the axle construction.

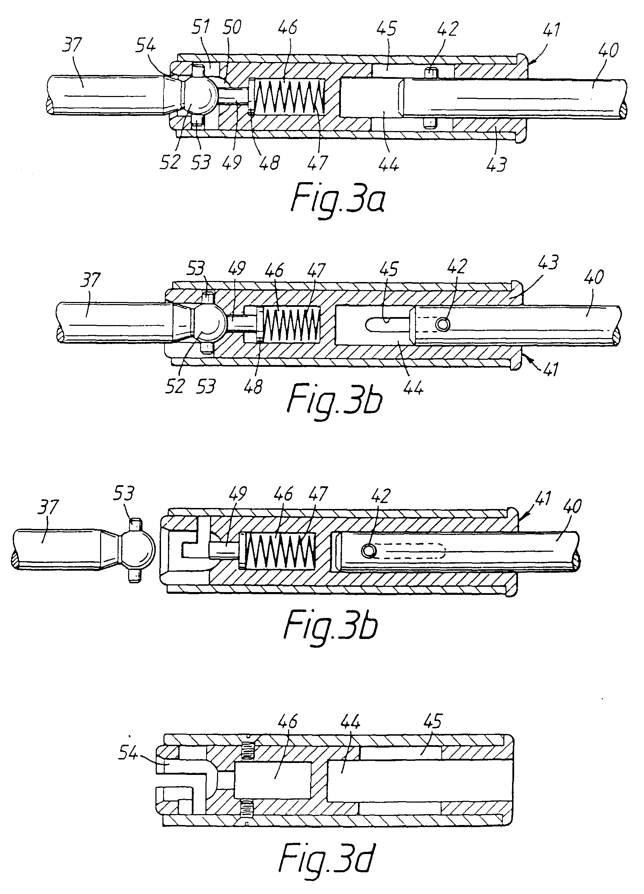

Referring to Figures 3a to 3c of the drawings, first part 37 of the axle can be seen to be joined to tubular member 40 of the third part of the axle by means of a bayonet fitting 41 which is secured to the free end of tubular member 40. For this purpose, the free end of tubular member 40 has a transverse pin 42 projecting diametrically therefrom. An internal body 43 is force fitted into one end of a cylindrical casing 41a of the bayonet fitting and retains the tubular member 40 in position within the bayonet fitting by preventing travel of the transverse pin 42 beyond a chamber 44 within the bayonet fitting. The pin is guided within a slot 45 within the plug 43 which for its part extends almost the entire length of the bayonet fitting. The bayonet fitting 41 is additionally provided with a piston chamber 46 housing a compression spring 47 and the head 48 of a piston member having a shaft 49 which extends through an axial passage in the body 43 into the curved base region 50 of an end chamber 51 which houses the rounded head 52 of the axle first part 37. The rounded head 52 is provided with a transverse pin 53 which has entered the chamber 51 through an angle passage 54 in the body 43. The socket construction of the bayonet fitting itself (the combination of body 43 and casing 41a) will be appreciated more completely from Figure 3d. Figures 3b and 3c show the arrangement of the aforementioned parts during successive stages in the disassembly of the axle parts.

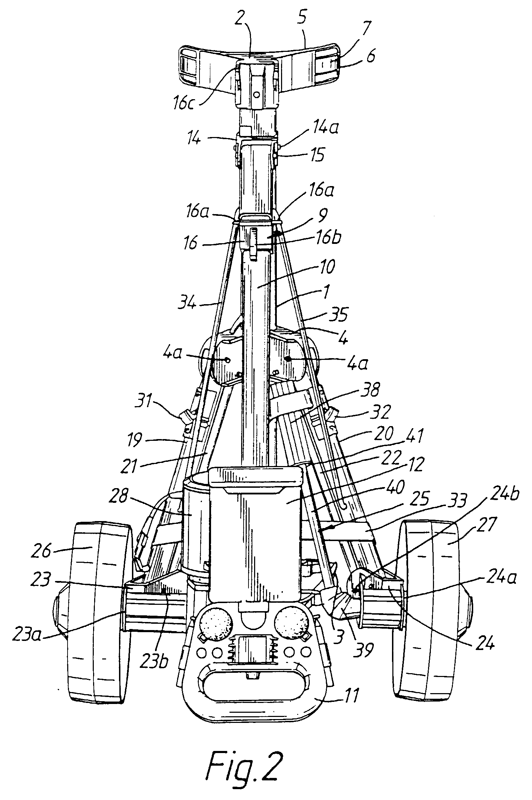

The collapsing down of the trolley of Figure 1 to the condition shown in Figure 2 will take place in the following way. With the trolley in the rest position on the ground, two basic steps are carried out. In one step, the golf bag 8 will be removed from the upper and lower golf bag retainers 2 and 3. In another step, battery 29 in its support tray 30 is lifted off its retaining hooks 31 and 32 and put to one side. Then the wheels 26 and 27 are disconnected. For this latter purpose, bayonet fitting 41 should be gripped in the right hand and pushed towards the motor side of the trolley. This will result in the piston head 48 entering chamber 46 and compressing the spring therein. At the same time, the tubular member 40 will travel towards the rear of chamber 44. Meanwhile, there will be twisting of the bayonet fitting 41 through 90° to enable the head 52 which has moved forward to the rounded base of chamber 51 to have its transverse pin enter the angle passage 54 so that the head can be withdrawn from chamber 50 in its entirety and parts 37 and 41 thus separated. The tubular member 40 with bayonet member 41 attached can then be folded through 90° by means of the flexible joint to lie parallel to limb 24.

Further folding of the trolley will take place in like manner to that carried out with manual trolleys. Thus, the gripping ring 16b will be pulled upwardly to release the pin 16a from groove 16c against the elastic force of strap 17. Once the pin has been freed, the handle arrangement 9 may be pivoted about bolt 15 towards the ground and as it approaches the arrangement of limbs 19 and 20, tension in the support rods 34 and 35 constrains the limbs 19 and 20 and the associated U-guide members 21 and 22 to pivot about bolts 4a in the A-bracket 4, thereby bringing the wheels 26 and 27 into closer proximity with the handle arrangement 9 eventually placed therebetween. In this way the height of the trolley will have been halved while the overall width of the trolley will, as shown in Figure 2, have been reduced to about two thirds its original value. The trolley folded down as shown in Figure 2 can now readily be loaded into a motor vehicle.

## Claims

1. A trolley construction comprising a wheel carrying portion and a load carrying portion each having structural components joined together by hinge members, and connected together in such manner as to permit folding of components of both wheel carrying portion and load carrying portion to take place at said hinge member, the wheel carrying portion comprising first and second wheels (26, 27) joined by an axle (25), characterised in that said axle (25) is of three part construction having a first part (37) adjacent one wheel, a second part (38) adjacent the other wheel and a third part (40, 41) having a first end and a second end with the first end being connected to the second part (38) via a flexible joint (39) and the second end being releasably connected to the first part (37) of the axle.

2. A trolley construction as claimed in claim 1, which additionally comprises drive means (28) driving in rotation the first part (37) of the axle.

3. A trolley construction as claimed in claim 2, comprising a removable battery support (30) spanning the load carrying portion to which it is attached, in use.

4. A trolley construction as claimed in any preceding claim, wherein said flexible joint (39) is a universal joint.

5. A trolley construction as claimed in any preceding claim, wherein said first part (37) of the axle is engaged with a bayonet fitting (41) comprised by the third part of the axle.
